# EUROPÄISCHE PATENTSCHRIFT

(11) **EP 2 900 417 B1**
(45) Veröffentlichungstag und Bekanntmachung des Hinweises auf die Patenterteilung: **10.07.2019**
(21) Anmeldenummer: 13759980.9
(22) Anmeldetag: 04.09.2013
(51) Int. Cl.: B23Q 1/48

(54) **DREHMODUL**
ROTARY MODULE
MODULE ROTATIF

(30) Priorität: 28.09.2012 DE 102012019250
(43) Veröffentlichungstag der Anmeldung: 05.08.2015
(73) Patentinhaber: Ludwig Ehrhardt GmbH, 35321 Laubach (DE)
(72) Erfinder: EHRHARDT, Winfried, 35321 Laubach (DE); KOHLERT, Rudolf, 63811 Stockstadt am Main (DE); RICHTER, Klaus, 35321 Laubach (DE)
(74) Vertreter: v. Bezold & Partner Patentanwälte - PartG mbB
(86) Internationale Anmeldenummer: PCT/EP2013/002656
(87) Internationale Veröffentlichungsnummer: WO 2014/048541

(56) Entgegenhaltungen:
- EP-A1- 1 250 977
- EP-A2- 0 340 681
- CH-A- 201 036
- DE-A1- 2 029 388
- DE-A1- 10 012 445
- DE-U1- 8 418 414
- JP-A- 2002 361 578

## Beschreibung

Die Erfindung betrifft ein Drehmodul zur drehbaren Positionierung eines Bauteils, insbesondere in einer Handhabungseinrichtung oder einer Montageeinrichtung.

Derartige Drehmodule sind an sich aus dem Stand der Technik bekannt und weisen ein Basisteil mit einer Montagemöglichkeit zur Montage des Drehmoduls auf, wobei die Montagemöglichkeit beispielsweise in einer Schraubverbindung bestehen kann. Darüber hinaus weisen die bekannten Drehmodule ein Drehteil auf, das relativ zu dem Basisteil drehbar ist und ebenfalls eine Montagemöglichkeit aufweist, um beispielsweise ein Werkstück oder ein sonstiges Bauteil an dem Drehmodul drehbar befestigen zu können. Ferner weisen die bekannten Drehmodule oftmals eine Indexierungseinrichtung auf, um das Drehteil relativ zu dem Basisteil in vorgegebenen diskreten Winkelstellungen arretieren zu können.

Hinsichtlich der Betätigung derartiger Drehmodule sind aus dem Stand der Technik verschiedene Bauweisen bekannt, die entweder manuell oder durch einen Motor über ein Schneckengetriebe angetrieben werden. Die bekannten Drehmodule sind jeweils für eine bestimmte Antriebsart (manuell oder motorisch) konstruiert und ermöglichen keine Umkonfiguration hinsichtlich der Antriebsart. Es ist also bei den bekannten Drehmodulen nicht möglich, das Drehmodul von einem motorischen Antrieb auf einen manuellen Antrieb oder umgekehrt umzurüsten.

Nachteilig an den bekannten Drehmodulen ist deshalb die mangelnde Flexibilität hinsichtlich der gewünschten Antriebsart.

Ferner ist zum Stand der Technik hinzuweisen auf DE 41 24 228 A1, DE 60 2004 010 912 T2, DE 27 23 146 A1, DE 18 00 036 A, DE 20 2010 009 079 U1 und DE 102 34 321 B3. Diese Druckschriften offenbaren jedoch nur Drehmodule, die entweder motorisch oder manuell angetrieben werden können.

Weiterhin ist zum Stand der Technik hinzuweisen auf CH 201 036 A, DE 20 29 388 A1, DE 100 12 445 A1 und JP 2002-361578 A. Keine dieser Druckschriften offenbart jedoch ein Drehmodul, das eine Materialzirkulation mit einer Hinleitung und einer Rückleitung durch eine Drehdurchführung hindurch ermöglicht.

Ferner offenbart DE 84 18 414 U1 einen Drehtisch mit einer mittigen axialen Bohrung zur Durchführung von Fluidleitungen. Allerdings weist dieser Drehtisch keine abgedichtete Drehdurchführung auf und es ist auch keine Materialzirkulation durch die mittige Bohrung hindurch vorgesehen.

Weiterhin offenbart EP 0 340 681 A2 ein Drehmodul gemäß dem Oberbegriff von Anspruch 1. Allerdings wird hierbei nur eine einzige Fluidleitung durch die Drehdurchführung hindurchgeführt, was keine Materialzirkulation ermöglicht.

Schließlich ist aus EP 1 250 977 A1 ein Drehmodul gemäß dem Oberbegriff von Anspruch 1 bekannt. Hierbei ist jedoch zur individuellen pneumatischen Ansteuerung der einzelnen Endeffektoren jeweils ein Ventil in dem Basisteil erforderlich. Für jeden individuell pneumatisch ansteuerbaren Endeffektor in dem Drehteil muss also ein Paar von Fluidleitungen durch die Drehdurchführung hindurchgeführt werden. Die Anzahl der individuell pneumatisch ansteuerbaren Endeffektoren ist hierbei also begrenzt.

Der Erfindung liegt deshalb die Aufgabe zu Grunde, ein entsprechend verbessertes Drehmodul zu schaffen.

Diese Aufgabe wird durch ein erfindungsgemäßes Drehmodul gemäß dem Hauptanspruch gelöst.

Das erfindungsgemäße Drehmodul weist in Übereinstimmung mit dem Stand der Technik ein Basisteil und ein relativ zu dem Basisteil drehbares Drehteil auf, wobei das Basisteil und das Drehteil jeweils Montagemöglichkeiten aufweisen, um das Drehmodul mit einem Bauteil (z.B. Werkstück oder ein anderes Drehmodul) zu verbinden.

Das erfindungsgemäße Drehmodul zeichnet sich gegenüber den bekannten Drehmodulen vorzugsweise dadurch aus, dass das Drehmodul wahlweise für einen motorischen Antrieb oder für einen manuellen Antrieb konfigurierbar ist.

Falls ein motorischer Antrieb des Drehmoduls gewünscht ist, so kann beispielsweise ein Schneckengetriebe in das Gehäuse des Drehmoduls eingesetzt werden, wobei das Schneckengetriebe beispielsweise von einem Elektromotor angetrieben werden kann. Allerdings ist ein derartiges Schneckengetriebe in der Regel selbsthemmend und blockiert deshalb bei stillstehendem Elektromotor eine manuelle Betätigung des Drehmoduls.

Falls also eine manuelle Betätigung des Drehmoduls gewünscht wird, so wird das Schneckengetriebe vorzugsweise aus dem Gehäuse des Drehmoduls entfernt, wodurch eine manuelle Betätigung möglich ist.

Der motorische Antrieb des Drehmoduls kann im Rahmen der Erfindung beispielsweise elektromotorisch, pneumatisch oder hydraulisch erfolgen. In einem bevorzugten Ausführungsbeispiel der Erfindung wird jedoch ein Elektromotor eingesetzt, der über ein Schneckengetriebe das Drehteil relativ zu dem Basisteil dreht.

Es wurde bereits vorstehend kurz erwähnt, dass der motorische Antrieb des Drehmoduls über ein Schneckengetriebe erfolgen kann, das von einem Rotationsmotor (z.B. Elektromotor) angetrieben wird, wobei das Schneckengetriebe selbsthemmend ist, so dass das Schneckengetriebe eine Drehbewegung des Drehteils relativ zu dem Basisteil blockiert, wenn der Rotationsmotor stillsteht. Bei einer entsprechend belastbaren mechanischen Auslegung des Schneckengetriebes kann das Schneckengetriebe also auch die Funktion einer Arretierung übernehmen, welche das Drehteil in einer bestimmten Winkelstellung relativ zu dem Basisteil arretiert. In diesem Fall kann auf eine zusätzliche Indexierungseinrichtung verzichtet werden.

In einem bevorzugten Ausführungsbeispiel der Erfindung weist das Drehmodul jedoch zusätzlich eine an sich bekannte Indexierungseinrichtung auf, die es ermöglicht, das Drehteil in einer bestimmten Winkelstellung relativ zu dem Basisteil zu arretieren, wobei die Indexierungseinrichtung vorzugsweise bestimmte diskrete Winkelstellungen vorgibt. Beispielsweise kann die Indexierungseinrichtung eine Verdrehung des Drehteils relativ zum Basisteil in Winkelschritten von jeweils einem Grad ermöglichen.

Weiterhin ist zu erwähnen, dass das Drehmodul eine Drehdurchführung aufweist, um Leitungen zwischen dem Basisteil und dem Drehteil durchzuführen.

Hierbei ist es vorteilhaft, wenn die Drehdurchführung in einer elastischen Lagerung in dem Drehmodul gelagert ist. So unterliegt das Lager mit dem Drehteil aufgrund der Lastmomente einer elastischen Verformung, welche die auf dem Drehteil gelagerte Drehdurchführung mitmacht. Die Drehdurchführung sollte deshalb in dem Basisteil zwangsfrei gelagert sein.

Vorzugsweise nimmt die Drehdurchführung mindestens zwei, drei oder sogar mindestens vier Fluidleitungen auf, wobei es sich beispielsweise um Hydraulikleitungen oder Pneumatikleitungen handeln kann. Beispielsweise ist es möglich, durch die Drehdurchführung drei Hydraulikleitungen und eine Pneumatikleitung hindurch zu führen, so dass an dem drehbaren Drehteil sowohl Hydraulikleitungen als auch Pneumatikleitungen zur Verfügung stehen.

Gemäß der Erfindung nimmt die Drehdurchführung sowohl eine Hinleitung als auch eine Rückleitung für ein Fluid (z.B. Hydraulikflüssigkeit) auf, wobei die Hinleitung das Fluid von dem Basisteil zu dem Drehteil leitet, während die Rückleitung das Fluid von dem Drehteil zu dem Basisteil zurückleitet. Auf diese Weise lässt sich ein Fluidkreislauf (z.B. Hydraulickreislauf) realisieren, der durch die Drehdurchführung hindurch reicht, was eine Materialzirkulation durch die Drehdurchführung hindurch ermöglicht.

Darüber hinaus nimmt die Drehdurchführung vorzugsweise mindestens eine Elektroleitung auf. In der Regel enthält die Drehdurchführung jedoch mehrere Elektroleitungen. Bei dieser Elektroleitung kann es sich beispielsweise um eine Steuerleitung handeln, um Ventile oder dergleichen anzusteuern. Darüber hinaus kann die Elektroleitung auch eine Sensorleitung sein, um Sensorgrößen von dem Drehteil zu dem Basisteil zurückzumelden.

In dem bevorzugten Ausführungsbeispiel der Erfindung verläuft die Elektroleitung in der Drehdurchführung mittig, während die Fluidleitungen (z.B. Hydraulikleitungen) in der Drehdurchführung außermittig verlaufen.

Ferner ist zu erwähnen, dass das erfindungsgemäße Drehmodul vorzugsweise ein Wälzlager aufweist, um das Drehteil und das Basisteil drehbar zu lagern. Die Drehdurchführung für die Leitungen verläuft hierbei vorzugsweise durch den Innenring des Wälzlagers hindurch. Es ist deshalb vorteilhaft, wenn der Innenring des Wälzlagers einen entsprechend großen Innendurchmesser aufweist, um möglichst viele Leitungen hindurchführen zu können. Der Außendurchmesser des Drehteils entspricht dem Innendurchmesser des Kugelkranzes und ist dadurch für die Aufnahme der Lastmomente aus Vorrichtungsgewicht und Montagemomenten optimiert. Der Kugelkranz sitzt ganz außen am Drehteil. Damit ist genügend Platz für die Drehdurchführungen vorhanden.

Ferner ist zu erwähnen, dass es sich bei dem Wälzlager vorzugsweise um ein Drahtwälzlager handelt, insbesondere um ein Drahtkugellager, wobei derartige Wälzlagertypen an sich aus dem Stand der Technik bekannt sind und deshalb nicht näher beschrieben werden müssen.

Weiterhin sind in dem bevorzugten Ausführungsbeispiel der Erfindung an dem Drehteil und/oder an dem Basisteil Kupplungen angebracht zum Ankuppeln der Fluidleitungen und/oder der Elektroleitung. Diese Kupplungen können beispielsweise als Steckkupplungen ausgebildet sein, was ein einfaches an- bzw. abkoppeln ermöglicht.

Ferner kann das erfindungsgemäße Drehmodul einen Winkeladapter aufweisen, der an dem Basisteil oder an dem Drehteil befestigt ist und eine angewinkelte Montage ermöglicht. Beispielsweise können zwei erfindungsgemäße Drehmodule durch einen derartigen Winkeladapter miteinander verbunden werden, wobei der Winkeladapter an dem Drehteil des einen Drehmoduls und an dem Basisteil des anderen Drehmoduls befestigt ist.

Vorzugsweise schließt der Winkeladapter einen rechten Winkel ein, so dass die Drehachsen der beiden miteinander verbundenen Drehmodule rechtwinklig zueinander ausgerichtet sind.

Gemäß der Erfindung ist an dem Drehteil des Drehmoduls eine Ventileinheit angebracht, wobei die Ventileinheit wahlweise als separate Baueinheit ausgebildet oder in das Drehteil integriert sein kann. Eingangsseitig ist diese Ventileinheit mit der von dem Basisteil kommenden Fluidleitung verbunden und weist ausgangsseitig mehrere unabhängig voneinander steuerbare Fluidanschlüsse auf. Die Ventileinheit wird hierbei von den von dem Basisteil kommenden Elektroleitungen angesteuert. Eine solche Ventileinheit bietet die Möglichkeit, dass die Anzahl der unabhängig voneinander steuerbaren Fluidanschlüsse der Ventileinheit größer ist als die Anzahl der von dem Basisteil kommenden Fluidleitungen.

Beispielsweise kann durch die Drehdurchführung lediglich eine Hinleitung und eine Rückleitung für ein Hydraulikfluid durchgeführt sein sowie zahlreiche Elektroleitungen zum ansteuern von Ventilen der Ventileinheit. Die einzelnen Ventile der Ventileinheit werden dann an den Fluidkreislauf von Hin- und Rückleitung angeschlossen und ermöglichen eine gesteuerte Fluidentnahme aus diesem Kreislauf. Auf diese Weise kann in dem Drehteil eine Vielzahl von unabhängig voneinander steuerbaren Fluidanschlüssen bereit gestellt werden, obwohl durch die Drehdurchführung nur zwei Fluidleitungen durchgeführt sein müssen.

Ferner ist zu erwähnen, dass an dem Drehteil weitere Bauteile angebracht sein können, wie beispielsweise ein Ventil, ein Relais, eine Spannvorrichtung oder ein Sensor, wie beispielsweise ein Positionssensor zur Ermittlung der Drehstellung des Drehteils.

Zusätzlich zu dem vorstehend beschriebenen Drehmodul umfasst die Erfindung auch eine Handhabungs- oder Montageeinrichtung mit mindestens einem solchen Drehmodul.

In einem bevorzugten Ausführungsbeispiel der Erfindung weist die Handhabungseinrichtung mehrere Drehmodule auf, die kinematisch hintereinander angeordnet sind, wobei die Drehmodule unterschiedlich ausgerichtete Drehachsen aufweisen können, wie beispielsweise eine vertikale Drehachse bei dem proximalen Drehmodul und eine horizontale Drehachse bei dem distalen Drehmodul. Das proximale Drehmodul und das distale Drehmodul sind hierbei kinematisch hintereinander angeordnet, wobei das distale Drehmodul bauteilseitig angeordnet ist, während das proximale Drehmodul montageseitig angeordnet ist.

Darüber hinaus kann die erfindungsgemäße Handhabungseinrichtung eine Hubsäule aufweisen, die eine vertikale Hubbewegung ermöglicht, wobei dann zur Medienzuführung eine Schleppkette vorgesehen sein kann.

In dem bevorzugten Ausführungsbeispiel der Erfindung ist eine Hubsäule vorgesehen, die eine vertikale Hubbewegung ermöglicht, wobei die Hubsäule ein erstes Drehmodul mit einer vertikalen Drehachse trägt, an dessen Drehteil ein zweites Drehmodul mit einer horizontalen Drehachse befestigt ist.

Andere vorteilhafte Weiterbildungen der Erfindung sind in den Unteransprüchen gekennzeichnet oder werden nachstehend zusammen mit der Beschreibung der bevorzugten Ausführungsbeispiele der Erfindung anhand der Figuren näher erläutert. Es zeigen:
Figur 1A eine Perspektivansicht einer erfindungsgemäßen Handhabungseinrichtung mit einer Hubsäule und zwei Drehmodulen,
Figur 1B eine Seitenansicht der Handhabungseinrichtung aus Figur 1B,
Figur 1C eine Frontansicht der Handhabungseinrichtung aus den Figuren 1A und 1B,
Figur 1D eine Aufsicht auf die Handhabungseinrichtung aus den Figuren 1A bis 1C,
Figur 2A eine Perspektivansicht eines erfindungsgemäßen Drehmoduls, wie es auch in der Handhabungseinrichtung gemäß den Figuren 1A bis 1D enthalten ist,
Figur 2B eine Aufsicht auf das Drehmodul gemäß Figur 2A,
Figur 2C eine Seitenansicht des Drehmoduls aus den Figuren 2A und 2B,
Figuren 3A-3D verschiedene Ansichten eines weiteren Ausführungsbeispiels eines erfindungsgemäßen Drehmoduls,
Figuren 4A-4D verschiedene Ansichten eines anderen Ausführungsbeispiels eines erfindungsgemäßen Drehmoduls,
Figuren 5A eine Perspektivansicht einer Ventileinheit, die in der Handhabungseinrichtung gemäß den Figuren 1A bis 1D an dem distalen (bauteilseitigen) Drehmodul angebracht ist,
Figur 5B eine Seitenansicht der Ventileinheit aus Figur 5A,
Figur 5C eine Frontansicht der Ventileinheit aus den Figuren 5A und 5B,
Figur 5D eine Seitenansicht der Ventileinheit aus den Figuren 5A bis 5C,
Figur 5E eine andere Seitenansicht der Ventileinheit aus den Figuren 5A bis 5D,
Figur 6 eine schematische Darstellung einer erfindungsgemäßen Handhabungseinrichtung mit zwei Drehmodulen und einer Spannvorrichtung.

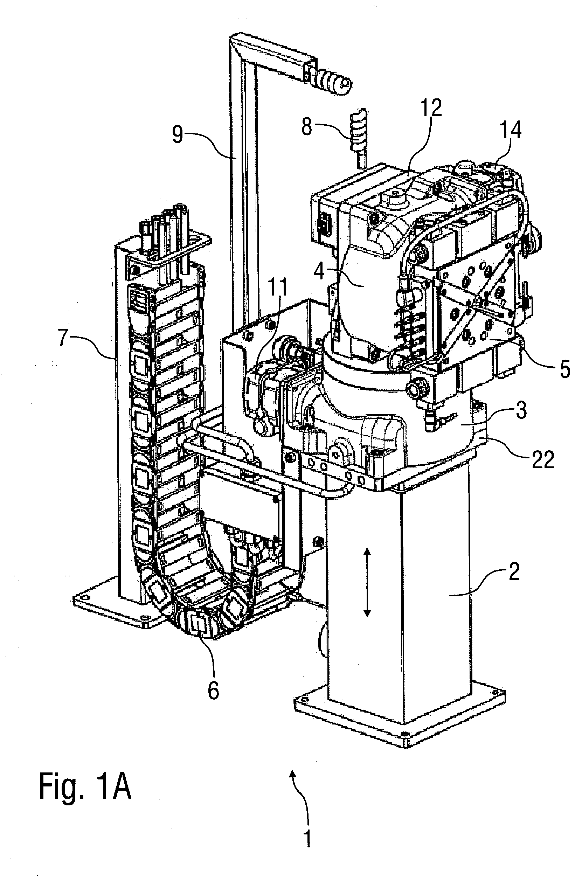

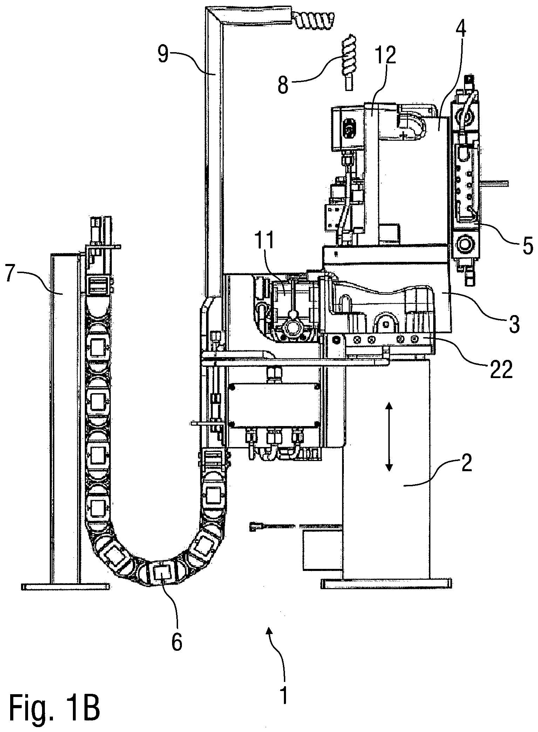

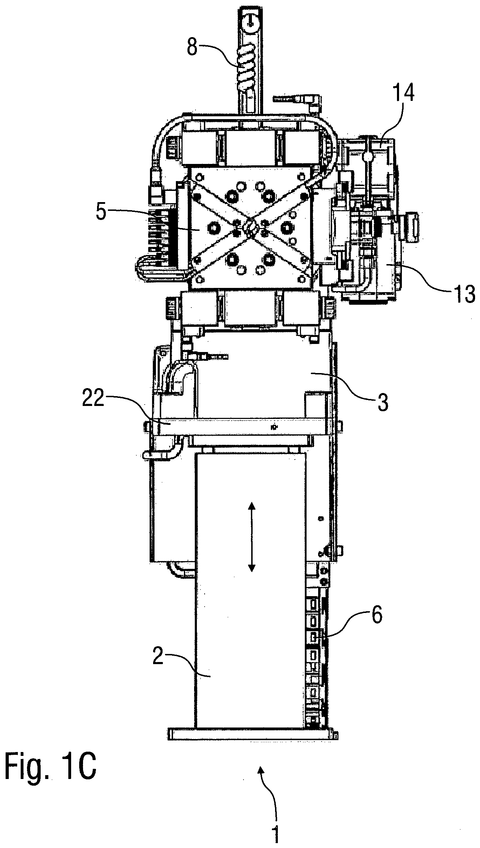

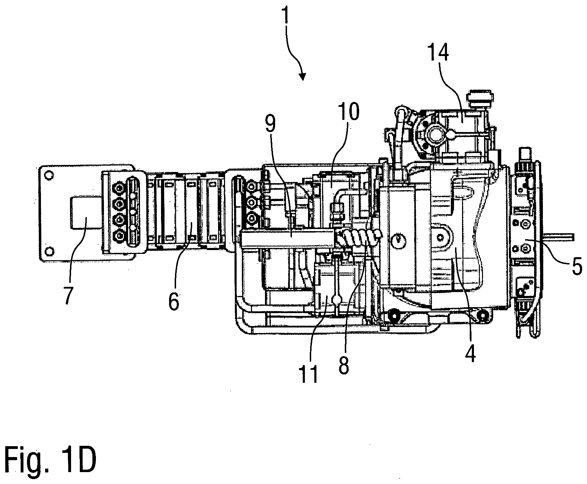

Die Figuren 1A bis 1D zeigen verschieden Ansichten einer erfindungsgemäßen Handhabungseinrichtung 1 zur Handhabung von Bauteilen (z.B. Werkstücken), wobei die Handhabungseinrichtung 1 beispielsweise eine Spannvorrichtung im Raum positionieren kann, die jedoch zur Vereinfachung in den Figuren 1A bis 1D nicht gezeigt ist.

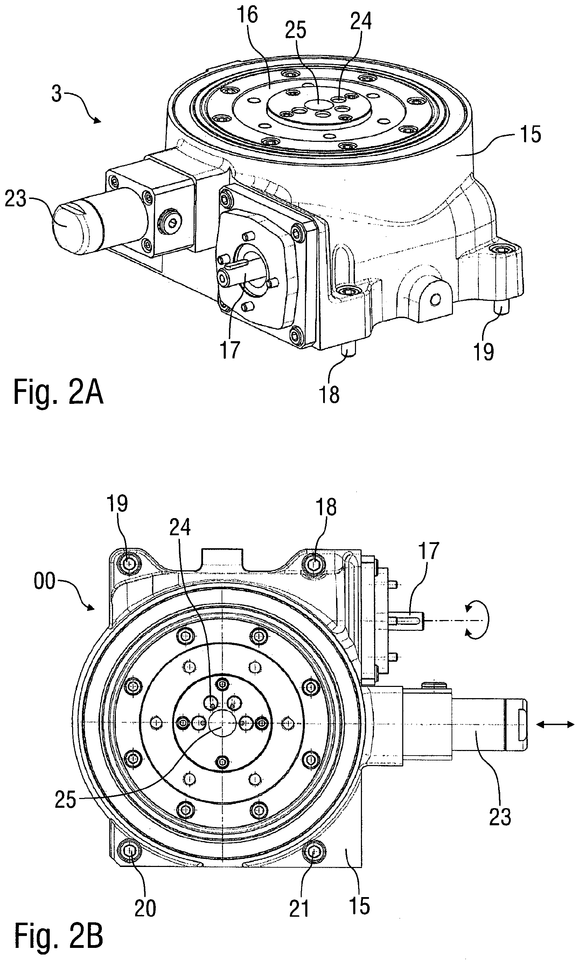

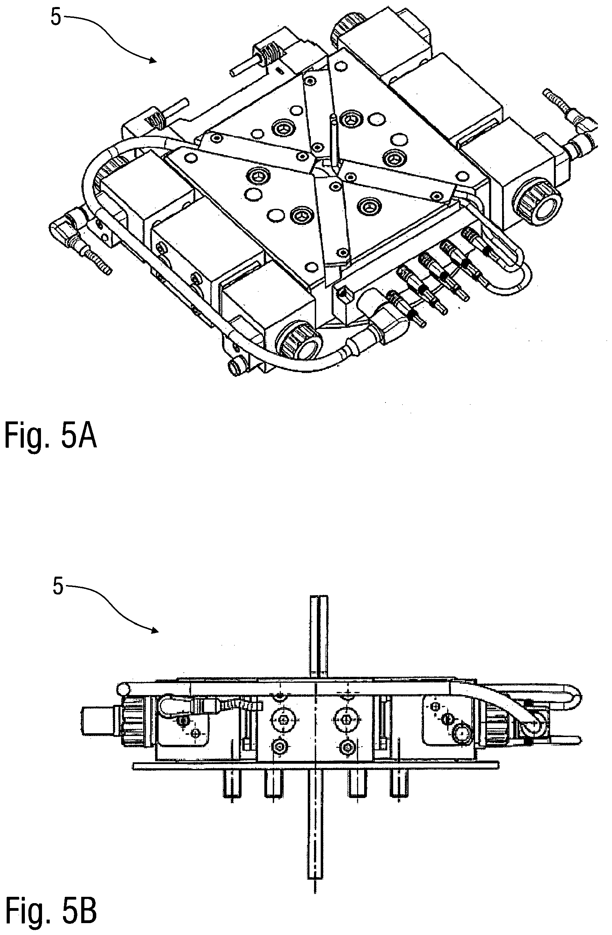

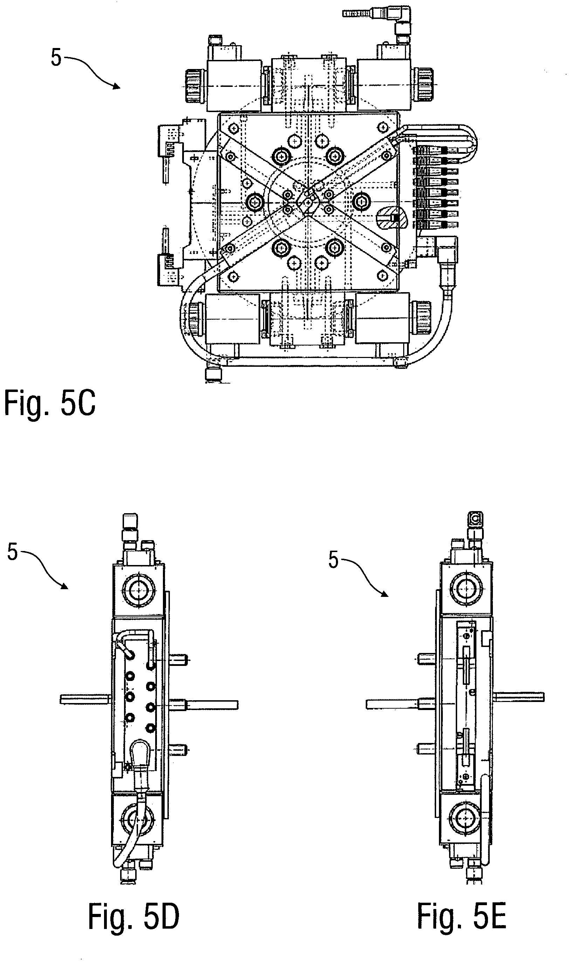

Die Handhabungsvorrichtung 1 besteht im Wesentlichen aus einer Hubsäule 2, zwei Drehmodulen 3, 4 und einer Ventileinheit 5, wobei die Drehmodule 3, 4 jeweils einzeln in den Figuren 2A bis 2C dargestellt sind, während die Ventileinheit 5 in den Figuren 5A bis 5E dargestellt ist.

Die Hubsäule 2 ermöglicht eine vertikale Bewegung des Drehmoduls 3 zusammen mit dem Drehmodul 4 und der Ventileinheit 5, wobei die vertikale Bewegung in Richtung des in der Zeichnung eingezeichneten Doppelpfeils erfolgt.

Zur Zuführung von Hydraulikleitungen weist die Hubsäule 2 eine Schleppkette 6 auf, die an einem Ständer 7 aufgehängt ist.

Weiterhin ist die Hubsäule 2 über eine Elektroleitung 8 an eine Steuereinheit angeschlossen, wobei die Elektroleitung 8 über einen Ständer 9 zugeführt wird.

Das Drehmodul 3 ist an der Oberseite der Hubsäule 2 angeordnet und weist eine vertikale Drehachse auf. Das Drehmodul 3 ermöglicht also eine Drehung des Drehmoduls 4 mit der Ventileinheit 5 um eine vertikale Drehachse. Hierbei wird das Drehmodul 3 von einem Elektromotor 10 über ein Getriebe 11 angetrieben. Das Drehmodul 3 ist also in diesem Ausführungsbeispiel für einen motorischen Antrieb konfiguriert. Das Drehmodul 3 kann jedoch alternativ auch für einen manuellen Antrieb konfiguriert werden, ohne dass das Drehmodul 3 baulich wesentlich verändert werden muss.

Das Drehmodul 4 ist dagegen mittels eines Winkeladapters 12 so an dem Drehmodul 3 montiert, dass die Drehachse des Drehmoduls 4 horizontal verläuft. Das Drehmodul 4 ermöglicht also eine Drehung der Ventileinheit 5 um eine horizontale Drehachse.

Der Antrieb des Drehmoduls 4 erfolgt durch einen Elektromotor 13 über ein Getriebe 14. Das Drehmodul 4 ist also in diesem Ausführungsbeispiel für einen motorischen Antrieb konfiguriert. Das Drehmodul 4 kann jedoch alternativ auch für einen manuellen Antrieb konfiguriert werden, wie noch detailliert beschrieben wird.

Die Ventileinheit 5 dient beispielsweise zur Ansteuerung einer Spannvorrichtung, die an der Ventileinheit 5 befestigt werden kann, wobei der genaue Aufbau und die Funktionsweise der Ventileinheit 5 noch später unter Bezugnahme auf in die Figuren 5A bis 5E detailliert beschrieben wird.

Im Folgenden wird nun unter Bezugnahme auf die Figuren 2A bis 2C der Aufbau und die Funktionsweise des Drehmoduls 3 beschrieben, wobei das Drehmodul 4 in gleicher Weise aufgebaut ist und funktioniert.

Das Drehmodul 3 weist ein Basisteil 15 und ein relativ zu dem Basisteil 15 drehbares Drehteil 16 auf, wobei das Drehteil 16 mittels eines Drahtkugellagers in dem Basisteil 15 drehbar gelagert ist.

In dem Basisteil 15 befindet sich ein Schneckengetriebe, das über eine Antriebswelle 17 angetrieben werden kann und in an sich bekannter Weise auf das Drehteil 16 wirkt, so dass eine Drehung der Antriebswelle 17 zu einer entsprechenden Drehung des Drehteils 16 in dem Basisteil 15 führt. In dem Ausführungsbeispiel gemäß den Figuren 1A bis 1D wird die Antriebswelle 17 von den Elektromotoren 10 bzw. 13 über die Getriebe 11 bzw. 14 angetrieben.

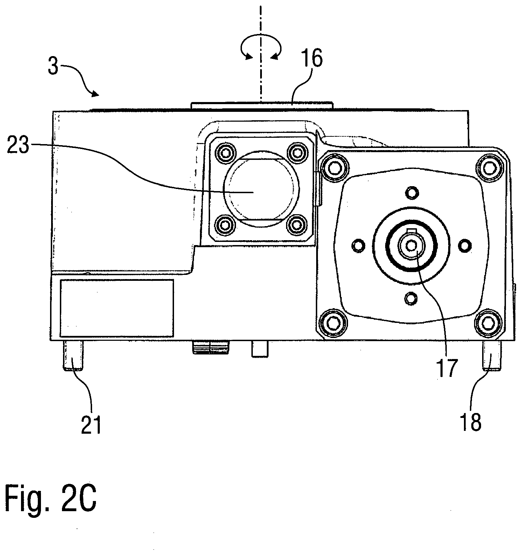

Ferner weist das Basisteil 15 des Drehmoduls 3 Schraubverbindungen 18, 19, 20, 21 auf, um das Basisteil 15 des Drehmoduls befestigen zu können. In der Handhabungseinrichtung 1 gemäß den Figuren 1A bis 1D dienen die Schraubverbindungen 18-21 dazu, das Drehmodul 3 an einem Adapter 22 festzuschrauben. Der Adapter 22 wird an der Flanschplatte der Hubsäule 2 befestigt. Darüber hinaus weist das Drehmodul 3 eine Indexierungseinrichtung auf, die es ermöglicht, das Drehteil 16 in dem Basisteil 15 in bestimmten diskreten Winkelstellungen zu arretieren. Die Betätigung der Indexierungseinrichtung erfolgt durch einen axial verschiebbaren Stößel 23, der in Richtung des Doppelpfeils (vgl. Fig. 2) linear bewegt werden kann. Zum Arretieren des Drehteils 16 in dem Basisteil 15 wird der Stößel 23 mittels Federkraft in das Drehmodul 3 hineingedrückt. Zum Lösen der Arretierung des Drehteils 16 in dem Basisteil 15 wird der Stößel 23 dagegen hydraulisch aus dem Drehmodul 3 herausgezogen.

Ferner weist das Drehmodul 3 in dem Drehteil 16 vier Drehdurchführungen 24 für Fluidleitungen auf, wobei drei der Drehdurchführungen 24 zur Durchführung von Hydraulikleitungen dienen, während eine der Drehdurchführungen 24 zur Durchführung einer Pneumatikleitung dient (vgl. Fig. 2A, 2B).

Darüber hinaus weist das Drehmodul 3 auch eine Drehdurchführung 25 (vgl. Fig. 2A, 2B) für Elektroleitungen auf, wie noch detailliert beschrieben wird.

An seiner oberen Stirnseite weist das Drehteil 16 ferner Montagemöglichkeiten auf, um ein Bauteil an dem Drehteil 16 befestigen zu können. Bei der Handhabungseinrichtung 1 gemäß den Figuren 1A bis 1C wird der Winkeladapter 12 an dem Drehteil 16 des Drehmoduls 3 festgeschraubt.

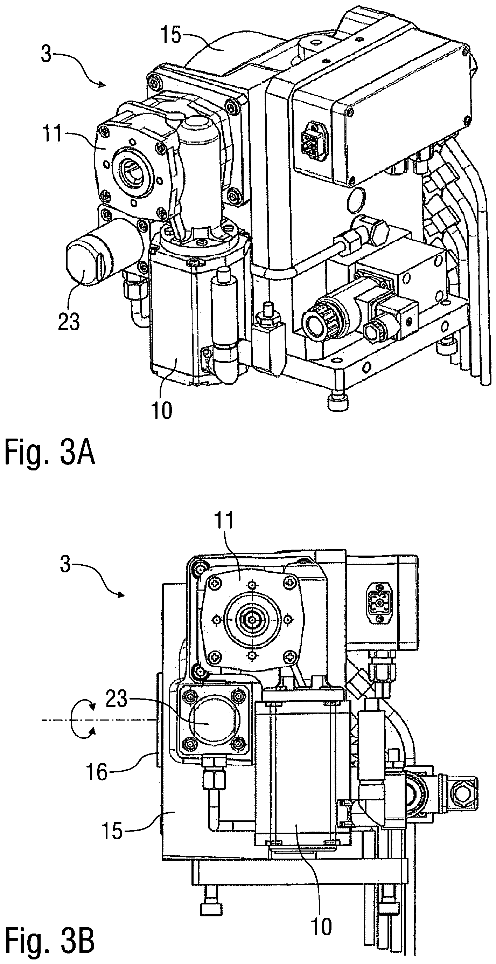

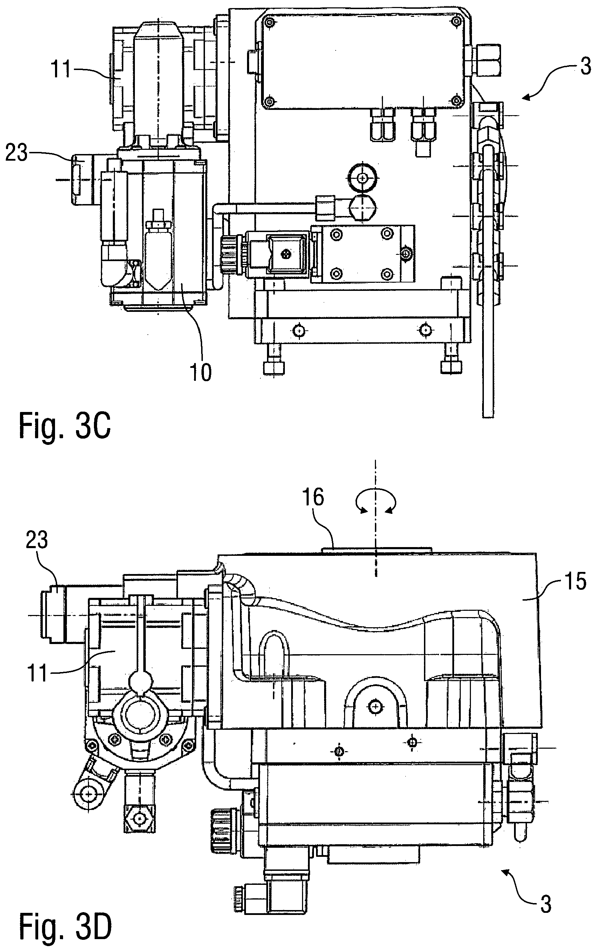

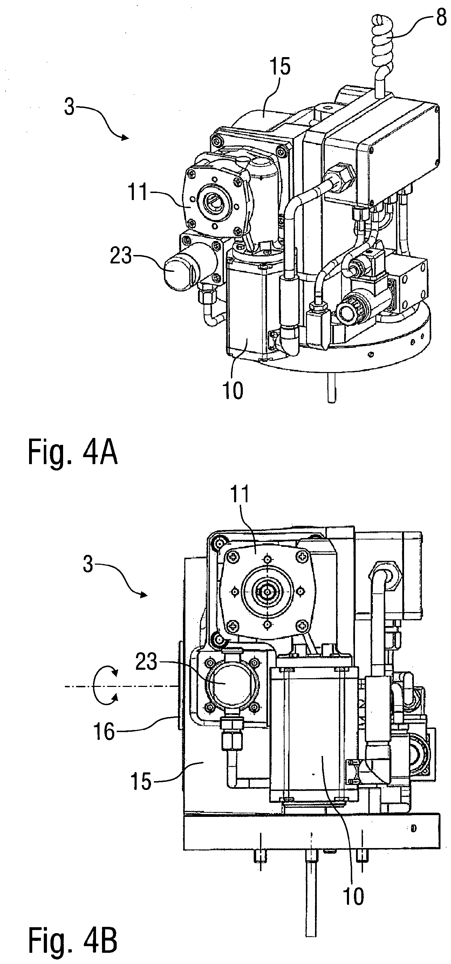

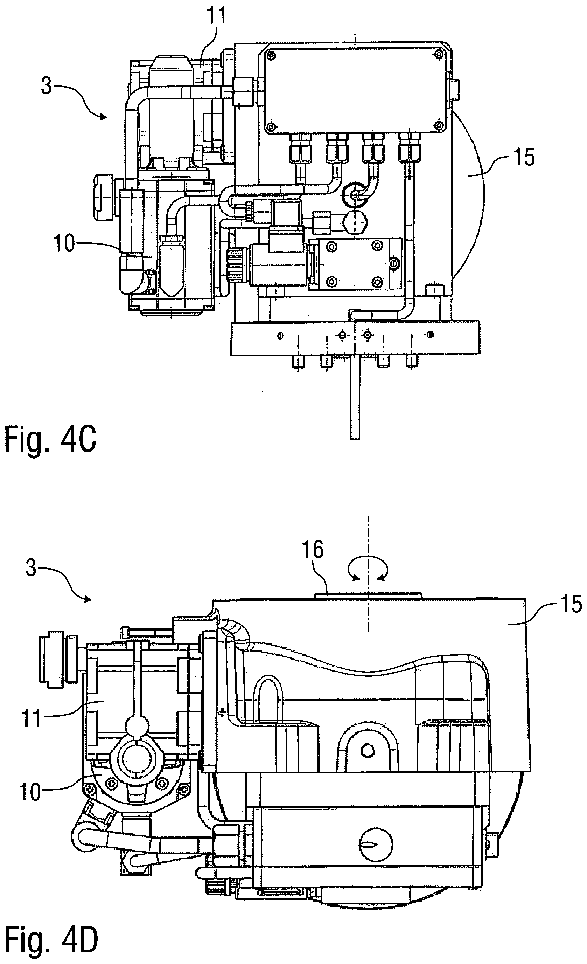

Die Figuren 3A bis 3D und 4A bis 4D zeigen Abwandlungen des Drehmoduls 3, so dass zur Vermeidung von Wiederholungen auf die vorstehende Beschreibung verwiesen wird, wobei für entsprechende Einzelheiten die selben Bezugszeichen verwendet werden. Hierbei sind die Drehmodule im wesentlichen gleich, wohingegen der Adapter unterschiedlich ist.

Die Figuren 5A bis 5E zeigen die Ventileinheit 5, die an dem Drehmodul 4 angebracht ist und beispielsweise zur Ansteuerung einer Spannvorrichtung dienen kann.

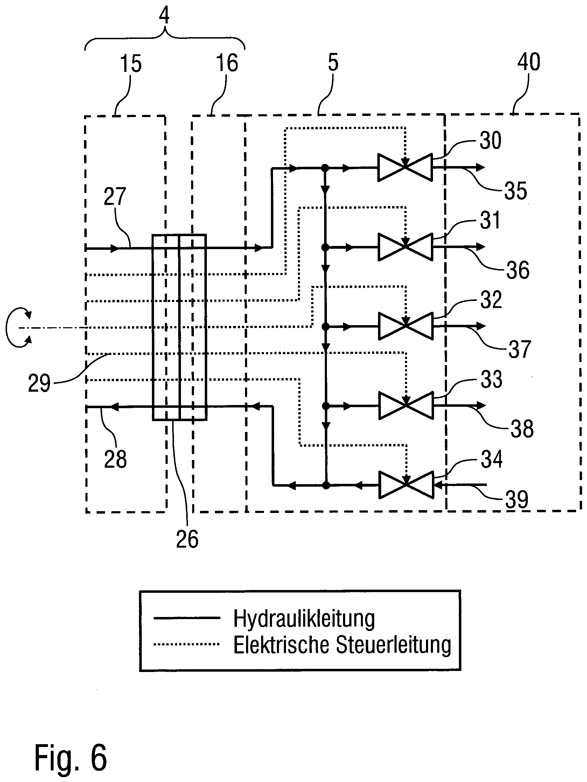

Im Folgenden wird nun unter Bezugnahme auf Figur 6 die dort gezeigte schematische Darstellung beschrieben, wobei zur Vermeidung von Wiederholung auf die vorstehende Beschreibung verwiesen wird.

So zeigt die Zeichnung in stark vereinfachter Form das Drehmodul 4 mit dem Basisteil 15 und dem Drehteil 16 sowie einer Drehdurchführung 26.

Zum einen nimmt die Drehdurchführung 26 Hydraulikleitungen auf, die mit einer durchgezogenen Linie dargestellt sind. Konkret handelt es sich hierbei um eine Hinleitung 27 und eine Rückleitung 28, wobei die Hinleitung 27 Hydrauliköl von dem Basisteil 15 über das Drehteil 16 zu der Ventileinheit 5 leitet. Die Rückleitung 28 leitet dagegen das Hydrauliköl von der Ventileinheit 5 über das Drehteil 16 zurück zu dem Basisteil 15.

Darüber hinaus nimmt die Drehdurchführung 26 noch mehrere elektrische Steuerleitungen 29 auf, die durch eine punktierte Linie dargestellt sind.

Die Ventileinheit 5 enthält hierbei mehrere steuerbare Ventile 30-34, die ausgangsseitig mehrere Fluidanschlüsse 35-39 bereitstellen, die unabhängig voneinander angesteuert werden.

Eingangsseitig sind die Ventile 30-34 an eine Verbindungsleitung zwischen der Hinleitung 27 und der Rückleitung 28 angeschlossen. Durch die Hinleitung 27 und die Rückleitung 28 fließt also ein Hydraulikkreislauf, aus dem die Ventile 30-34 Hydraulikflüssigkeit entnehmen können, um eine Spannvorrichtung 40 anzusteuern, die hier nur schematisch dargestellt wird. Die Ventile 30-34 können hierbei wahlweise als Zulaufventile oder als Rücklaufventile dienen.

**Bezugszeichenliste:**

| | | | |
|---|---|---|---|
| 1 | Handhabungseinrichtung | 32 | Ventil |
| 2 | Hubsäule | 33 | Ventil |
| 3 | Drehmodul | 34 | Ventil |
| 4 | Drehmodul | 35 | Fluidanschluss |
| 5 | Ventileinheit | 36 | Fluidanschluss |
| 6 | Schleppkette | 37 | Fluidanschluss |
| 7 | Ständer | 38 | Fluidanschluss |
| 8 | Elektroleitung | 39 | Fluidanschluss |
| 9 | Ständer | 40 | Spannvorrichtung |
| 10 | Elektromotor | | |
| 11 | Getriebe | | |
| 12 | Winkeladapter | | |
| 13 | Elektromotor | | |
| 14 | Getriebe | | |
| 15 | Basisteil | | |
| 16 | Drehteil | | |
| 17 | Antriebswelle | | |
| 18 | Schraubverbindung | | |
| 19 | Schraubverbindung | | |
| 20 | Schraubverbindung | | |
| 21 | Schraubverbindung | | |
| 22 | Adapter | | |
| 23 | Stößel | | |
| 24 | Drehdurchführungen | | |
| 25 | Drehdurchführungen | | |
| 26 | Drehdurchführung | | |
| 27 | Hinleitung | | |
| 28 | Rückleitung | | |
| 29 | Steuerleitungen | | |
| 30 | Ventil | | |
| 31 | Ventil | | |

## Patentansprüche

1. Drehmodul (3, 4) zur drehbaren Positionierung eines Bauteils, insbesondere in einer Handhabungseinrichtung (1) oder einer Montageeinrichtung, mit
a) einem Basisteil (15) mit einer Montagemöglichkeit zur Montage des Drehmoduls (3, 4),
b) einem Drehteil (16) mit einer Montagemöglichkeit zur Montage des Bauteils an dem Drehmodul (3, 4), wobei das Drehteil (16) relativ zu dem Basisteil (15) drehbar ist, und
c) einer Drehdurchführung (24, 25; 26) zur Durchführung von Leitungen (27, 28, 29) zwischen dem Basisteil (15) und dem Drehteil (16),
c1) wobei die Drehdurchführung (24, 25; 26) eine Hinleitung (27) aufnimmt, die ein Fluid von dem Basisteil (15) zu dem Drehteil (16) leitet,
c2) wobei die Drehdurchführung (24, 25; 26) auch eine Rückleitung (28) aufnimmt, die das Fluid von dem Drehteil (16) zu dem Basisteil (15) zurück leitet, was eine Materialzirkulation des Fluids durch die Drehdurchführung (24, 25; 26) hindurch ermöglicht,
**dadurch gekennzeichnet,**
d) **dass** an dem Drehteil (16) eine Ventileinheit (5) angebracht ist,
e) **dass** die Ventileinheit (5) eingangsseitig mit den von dem Basisteil (15) kommenden Fluidleitungen (27, 28) verbunden ist und ausgangsseitig mehrere unabhängig voneinander steuerbare Fluidanschlüsse (35-39) aufweist, und
f) **dass** die Anzahl der unabhängig voneinander steuerbaren Fluidanschlüsse (35-39) der Ventileinheit (5) größer ist als die Anzahl der von dem Basisteil (15) kommenden Fluidleitungen (27, 28).

2. Drehmodul nach Anspruch 1, **dadurch gekennzeichnet, dass** das Drehmodul (3, 4) wahlweise für einen motorischen Antrieb (10, 11, 13, 14) oder für einen manuellen Antrieb konfigurierbar ist.

3. Drehmodul (3, 4) nach Anspruch 2, **dadurch gekennzeichnet, dass** der motorische Antrieb (10, 11, 13, 14) elektromotorisch, pneumatisch oder hydraulisch arbeitet.

4. Drehmodul (3, 4) nach einem der Ansprüche 2 oder 3, **dadurch gekennzeichnet,**
a) **dass** der motorische Antrieb (10, 11, 13, 14) einen Rotationsmotor (10, 13) und ein Schneckengetriebe aufweist, und
b) **dass** das Schneckengetriebe selbsthemmend ist, so dass das Schneckengetriebe eine Drehbewegung des Drehteils (16) relativ zu dem Basisteil (15) blockiert, wenn der Rotationsmotor (10, 13) stillsteht.

5. Drehmodul (3, 4) nach einem der vorhergehenden Ansprüche, **gekennzeichnet durch** eine Indexierungseinrichtung (23) zum Arretieren des Drehteils (16) relativ zu dem Basisteil (15) in vorgegebenen diskreten Winkelstellungen.

6. Drehmodul (3, 4) nach einem der vorhergehenden Ansprüche, **dadurch gekennzeichnet, dass** die Drehdurchführung (24, 25; 26) in einer elastischen Lagerung in dem Drehmodul (3, 4) gelagert ist.

7. Drehmodul (3, 4) nach Anspruch 6,
**dadurch gekennzeichnet,**
a) **dass** die Drehdurchführung (24, 25; 26) mindestens vier Fluidleitungen aufnimmt, insbesondere Hydraulikleitungen oder Pneumatikleitungen, und
b) **dass** die Drehdurchführung (24, 25; 26) mindestens eine Elektroleitung (29) aufnimmt, und/oder
c) **dass** die Elektroleitung (29) in der Drehdurchführung (24, 25; 26) mittig verläuft, und
d) **dass** die Fluidleitungen in der Drehdurchführung (24, 25; 26) außermittig verlaufen.

8. Drehmodul (3, 4) nach einem der vorhergehenden Ansprüche, **dadurch gekennzeichnet,**
a) **dass** das Drehmodul (3, 4) ein Wälzlager aufweist zur drehbaren Lagerung des Drehteils (16) und des Basisteils (15), und
b) **dass** die Drehdurchführung (24, 25; 26) durch den Innenring des Wälzlagers hindurch verläuft, und
c) **dass** das Wälzlager ein Drahtwälzlager ist, insbesondere ein Drahtkugellager.

9. Drehmodul (3, 4) nach einem der vorhergehenden Ansprüche, **dadurch gekennzeichnet,**
a) **dass** das Drehteil (16) und/oder das Basisteil (15) Kupplungen aufweist zum Ankuppeln der Fluidleitungen und/oder der Elektroleitung, und
b) **dass** die Kupplungen Steckkupplungen sind.

10. Drehmodul (3, 4) nach einem der vorhergehenden Ansprüche, **gekennzeichnet durch** einen Winkeladapter (12), der an dem Basisteil (15) oder an dem Drehteil (16) befestigt und eine angewinkelte Montage ermöglicht.

11. Drehmodul (3, 4) nach einem der vorhergehenden Ansprüche, **dadurch gekennzeichnet, dass** die Ventileinheit (5) von den von dem Basisteil (15) kommenden Elektroleitungen (29) angesteuert wird.

12. Drehmodul (3, 4) nach einem der vorhergehenden Ansprüche, **dadurch gekennzeichnet, dass** an dem Drehteil (16) mindestens eines der folgenden Bauteil angebracht ist:
a) ein Ventil,
b) ein Relais,
c) eine Spannvorrichtung (40), die vorzugsweise über die Fluidanschlüsse (35-39) der Ventileinheit (5) angesteuert wird,
d) ein Sensor, insbesondere ein Positionssensor zur Ermittlung der Drehstellung des Drehteils (16) oder eines Werkstücks,
e) ein Winkeladapter, insbesondere mit einem Drehmodul,
f) eine Schnellwechseleinheit.

13. Handhabungseinrichtung (1) mit mindestens einem Drehmodul (3, 4) nach einem der vorhergehenden Ansprüche.

14. Handhabungseinrichtung (1) nach Anspruch 13,
**dadurch gekennzeichnet,**
a) **dass** mehrere Drehmodule (3, 4) nach einem der vorhergehenden Ansprüche vorgesehen sind, wobei die Drehmodule (3, 4) kinematisch hintereinander angeordnet sind, und
b) **dass** die Drehmodule (3, 4) unterschiedlich ausgerichtete Drehachsen aufweisen, insbesondere eine vertikale Drehachse und eine horizontale Drehachse, und
c) **dass** eine Hubsäule (2) vorgesehen ist für eine vertikale Hubbewegung des Drehmoduls (3, 4), und
d) **dass** die Hubsäule (2) zur Medienzuführung eine Schleppkette aufweist, und
e) **dass** die Handhabungseinrichtung (1) auf mehr fünf Seiten für Montagearbeitsgänge zugänglich ist.

15. Handhabungseinrichtung (1) nach einem der Ansprüche 13 oder 14, **gekennzeichnet durch**
a) eine Hubsäule (2), die eine vertikale Hubbewegung ermöglicht,
b) ein erstes Drehmodul (3), das auf der Hubsäule (2) montiert ist und eine vertikale Drehachse aufweist, und
c) ein zweites Drehmodul (4), das an dem Drehteil (16) des ersten Drehmoduls (3, 4) montiert ist und eine horizontale Drehachse aufweist.

## Claims

1. Rotary module (3, 4) for the rotatable positioning of a component, in particular in a handling device (1) or an assembly device, with
a) a base part (15) with a mounting option for mounting the rotary module (3, 4),
b) a rotary part (16) with a mounting option for mounting the component on the rotary module (3, 4), the rotary part (16) being rotatable relative to the base part (15), and
c) a rotary bushing (24, 25; 26) for passing lines (27, 28, 29) between the base part (15) and the rotary part (16),
c1) said rotary bushing (24, 25; 26) receiving a forward conduit (27) that conducts a fluid from said base part (15) to said rotary part (16),
c2) the rotary bushing (24, 25; 26) also receiving a return conduit (28) which returns the fluid from the rotary part (16) to the base part (15) allowing material circulation of the fluid through the rotary bushing (24, 25; 26),
**characterized in that**
d) a valve unit (5) is attached to the rotary part (16),
e) the valve unit (5) is connected on the input side to the fluid lines (27, 28) coming from the base part (15) and has a plurality of independently controllable fluid connections (35-39) on the output side, and
f) the number of independently controllable fluid connections (35-39) of the valve unit (5) is greater than the number of fluid lines (27, 28) coming from the base part (15) .

2. Rotary module according to claim 1, **characterized in that** **in that** the rotary module (3, 4) can optionally be configured for a motor drive (10, 11, 13, 14) or for a manual drive.

3. Rotary module (3, 4) according to claim 2, **characterized in that** the motor drive (10, 11, 13, 14) operates electromotively, pneumatically or hydraulically.

4. Rotary module (3, 4) according to any of claims 2 or 3, **characterized in that**
a) the motor drive (10, 11, 13, 14) comprises a rotary motor (10, 13) and a worm gear, and
b) the worm gear is self-locking such that the worm gear blocks rotation of the rotary part (16) relative to the base part (15) when the rotary motor (10, 13) is at a standstill.

5. Rotary module (3, 4) according to any of the preceding claims, **characterized by** indexing means (23) for locking the rotation part (16) relative to the base part (15) in predetermined discrete angular positions.

6. Rotary module (3, 4) in accordance with any of the preceding claims, **characterized in that** the rotary feedthrough (24, 25; 26) is mounted in an elastic bearing in the rotary module (3, 4).

7. Rotary module (3, 4) according to claim 6,
**characterized in that**
a) the rotary bushing (24, 25; 26) accommodates at least four fluid conduits, in particular hydraulic conduits or pneumatic lines, and
b) the rotary bushing (24, 25; 26) accommodates at least one electrical line (29), and/or
c) the electric line (29) runs centrally in the rotary feedthrough (24, 25; 26), and
d) the fluid lines in the rotary bushing (24, 25; 26) run off-centre.

8. Rotary module (3, 4) in accordance with any of the preceding claims, **characterized in that**
a) the rotary module (3, 4) has a rolling bearing for rotatably mounting the rotary part (16) and the base part (15), and
b) the rotary bushing (24, 25; 26) passes through the inner ring of the rolling bearing, and
c) the rolling bearing is a wire-race bearing, in particular a wire-race ball bearing.

9. Rotary module (3, 4) in accordance with any of the preceding claims, **characterized in that**
a) the rotary part (16) and/or the base part (15) has couplings for coupling the fluid lines and/or the electric line, and
b) the couplings are plug couplings.

10. Rotary module (3, 4) according to any of the preceding claims, **characterized by** an angle adapter (12) which is fastened to the base part (15) or to the rotary part (16) and permits angled mounting.

11. Rotary module (3, 4) in accordance with any of the preceding claims, **characterized in that** the valve unit (5) is actuated by the electrical lines (29) coming from the base part (15).

12. Rotary module (3, 4) according to any of the preceding claims, **characterized in that** at least any of the following components is attached to the rotary part (16):
a) a valve,
b) a relay,
c) a clamping device (40) which is preferably actuated via the fluid connections (35-39) of the valve unit (5),
d) a sensor, in particular a position sensor, for determining the rotational position of the rotary part (16) or of a workpiece,
e) an angle adapter, in particular with a rotary module,
f) a quick-change unit.

13. Handling device (1) with at least one rotary module (3, 4) according to any of the preceding claims.

14. Handling device (1) according to claim 13,
**characterized in that**
a) a plurality of rotary modules (3, 4) are provided according to any of the preceding claims, the rotary modules (3, 4) being arranged kinematically one behind the other, and
b) the rotary modules (3, 4) have differently aligned axes of rotation, in particular a vertical axis of rotation and a horizontal axis of rotation, and
c) a lifting column (2) is provided for a vertical lifting movement of the rotary module (3, 4), and
d) the lifting column (2) has a drag chain for media supply, and
e) the handling device (1) is accessible for assembly operations on more than five positions.

15. Handling device (1) in accordance with any of the claims 13 or 14, **characterized by**
a) a lifting column (2) enabling a vertical lifting movement,
b) a first rotary module (3) which is mounted on the lifting column (2) and has a vertical axis of rotation, and
c) a second rotary module (4) which is mounted on the rotary part (16) of the first rotary module (3, 4) and has a horizontal axis of rotation.

## Revendications

1. Module rotatif (3, 4) pour le positionnement rotatif d'un composant, en particulier dans un dispositif de manipulation (1) ou un dispositif de montage, avec
a) une partie de base (15) avec une possibilité de montage pour le montage du module rotatif (3, 4),
b) une partie de rotation (16) avec une possibilité de montage pour le montage du composant sur le module rotatif (3, 4), dans lequel la partie de rotation (16) est rotative par rapport à la partie de base (15),
c) un passage rotatif (24, 25 ; 26) pour la réalisation de conduites (27, 28, 29) entre la partie de base (15) et la partie de rotation (16),
c1) dans lequel le passage rotatif (24, 25 ; 26) reçoit une conduite aller (27) qui mène un fluide de la partie de base (15) à la partie de rotation (16),
c2) dans lequel le passage rotatif (24, 25 ; 26) reçoit aussi une conduite retour (28) qui ramène le fluide de la partie de rotation (16) à la partie de base (15), ce qui permet une circulation de matériau du fluide au travers du passage rotatif (24, 25 ; 26),
**caractérisé en ce**
d) **qu'**une unité de vanne (5) est montée sur la partie de rotation (16),
e) **que** l'unité de vanne (5) est raccordée côté entrée aux conduites de fluide (27, 28) venant de la partie de base (15) et présente côté sortie plusieurs raccords fluidiques (35-39) commandables indépendamment les uns des autres, et
f) **que** le nombre des raccords fluidiques (35-39) commandables indépendamment les uns des autres de l'unité de vanne (5) est plus grand que le nombre de conduites de fluide (27, 28) venant de la partie de base (15).

2. Module rotatif selon la revendication 1, **caractérisé en ce que** le module rotatif (3, 4) peut être configuré au choix pour un entraînement motorisé (10, 11, 13, 14) ou pour un entraînement manuel.

3. Module rotatif (3, 4) selon la revendication 2, **caractérisé en ce que** l'entraînement motorisé (10, 11, 13, 14) travaille par voie électromotorisée, pneumatique ou hydraulique.

4. Module rotatif selon l'une quelconque des revendications 2 ou 3, **caractérisé en ce**
a) **que** l'entraînement motorisé (10, 11, 13, 14) présente un moteur de rotation (10, 13) et un engrenage à vis sans fin, et
b) **que** l'engrenage à vis sans fin est autobloquant de sorte que l'engrenage à vis sans fin bloque un mouvement rotatif de la partie de rotation (16) par rapport à la partie de base (15) lorsque le moteur de rotation (10, 13) s'arrête.

5. Module rotatif (3, 4) selon l'une quelconque des revendications précédentes, **caractérisé par** un dispositif d'indexation (23) pour l'arrêt de la partie de rotation (16) par rapport à la partie de base (15) dans des positions angulaires discrètes prédéfinies.

6. Module rotatif (3, 4) selon l'une quelconque des revendications précédentes, **caractérisé en ce que** le passage rotatif (24, 25 ; 26) est logé dans un logement élastique dans le module rotatif (3, 4).

7. Module rotatif (3, 4) selon la revendication 6, **caractérisé en ce**
a) **que** le passage rotatif (24, 25 ; 26) reçoit au moins quatre conduites de fluide, en particulier conduites hydrauliques ou conduites pneumatiques, et
b) **que** le passage rotatif (24, 25 ; 26) reçoit au moins un câble électrique (29), et/ou
c) **que** le câble électrique (29) s'étend au milieu dans le passage rotatif (24, 25 ; 26), et
d) **que** les conduites de fluide s'étendent de manière excentrée dans le passage rotatif (24, 25 ; 26).

8. Module rotatif (3, 4) selon l'une quelconque des revendications précédentes, **caractérisé en ce**
a) **que** le module rotatif (3, 4) présente un roulement pour le logement rotatif de la partie de rotation (16) et de la partie de base (15), et
b) **que** le passage rotatif (24, 25 ; 26) s'étend au travers de l'anneau intérieur du roulement, et
c) **que** le roulement est un roulement sur fils, en particulier un roulement à billes sur fils.

9. Module rotatif (3, 4) selon l'une quelconque des revendications précédentes, **caractérisé en ce**
a) **que** la partie de rotation (16) et/ou la partie de base (15) présente des couplages pour le couplage des conduites de fluide et/ou du câble électrique, et
b) **que** les couplages sont des couplages enfichables.

10. Module rotatif (3, 4) selon l'une quelconque des revendications précédentes, **caractérisé par** un adaptateur angulaire (12) qui se fixe à la partie de base (15) ou à la partie de rotation (16) et permet un montage coudé.

11. Module rotatif (3, 4) selon l'une quelconque des revendications précédentes, **caractérisé en ce que** l'unité de vanne (5) est commandée par les câbles électriques (29) venant de la partie de base (15).

12. Module rotatif (3, 4) selon l'une quelconque des revendications précédentes, **caractérisé en ce que** sur la partie de rotation (16) au moins un des composants suivants est monté :
a) une vanne,
b) un relais,
c) un dispositif de serrage (40) qui est commandé de préférence par les raccords de fluide (35-39) de l'unité de vanne (5),
d) un capteur, en particulier un capteur de position pour la détermination de la position rotative de la partie de rotation (16) ou d'une pièce à usiner,
e) un adaptateur angulaire, en particulier avec un module de rotation,
f) une unité de changement rapide.

13. Dispositif de manipulation (1) avec au moins un module rotatif (3, 4) selon l'une quelconque des revendications précédentes.

14. Dispositif de manipulation (1) selon la revendication 13, **caractérisé en ce**
a) **que** plusieurs modules rotatifs (3, 4) selon l'une quelconque des revendications précédentes sont prévus, dans lequel les modules rotatifs (3, 4) sont agencés de manière cinématique l'un derrière l'autre, et
b) **que** les modules rotatifs (3, 4) présentent des axes de rotation orientés différemment, en particulier un axe de rotation vertical et un axe de rotation horizontal, et
c) **qu'**une colonne de levage (2) est prévue pour un mouvement de levage vertical du module rotatif (3, 4), et
d) **que** la colonne de levage (2) présente pour l'amenée de milieu une chaîne d'entraînement à raclettes, et
e) **que** le dispositif de manipulation (1) est accessible sur plus de cinq côtés pour des opérations de montage.

15. Dispositif de manipulation (1) selon l'une quelconque des revendications 13 ou 14, **caractérisé par**
a) une colonne de levage (2) qui permet un mouvement de levage vertical,
b) un premier module rotatif (3) qui est monté sur la colonne de levage (2) et présente un axe de rotation vertical, et
c) un second module de rotation (4) qui est monté sur la partie de base (16) du premier module rotatif (3, 4) et présente un axe de rotation horizontal.
